## Europäisches Patentamt
## European Patent Office
## Office européen des brevets

(11) Veröffentlichungsnummer: **0 019 873**
**B1**

(12) **EUROPÄISCHE PATENTSCHRIFT**

(45) Veröffentlichungstag der Patentschrift :
13.10.82

(21) Anmeldenummer : 80102881.2

(22) Anmeldetag : 23.05.80

(51) Int. Cl.³ : **B 60 R 9/04**, B 60 R 9/08,
B 60 P 3/10

(54) Transportvorrichtung zur Befestigung auf einem Autodach.

(30) Priorität : 29.05.79 DE 2921703

(43) Veröffentlichungstag der Anmeldung :
10.12.80 (Patentblatt 80/25)

(45) Bekanntmachung des Hinweises auf die Patenterteilung : 13.10.82 Patentblatt 82/41

(84) Benannte Vertragsstaaten :
CH FR LI NL

(56) Entgegenhaltungen :
DE A 2 548 675
DE A 2 707 666
DE B 2 426 419
DE U 7 816 134
US A 3 836 058

(73) Patentinhaber : Heinrich Eckel GmbH & Co KG
Freisinger Strasse 1
D-8057 Eching b.München (DE)

(72) Erfinder : Wimmer, Hans
Bahnhofstrasse 4
D-8031 Gernlinden (DE)
Erfinder : Eckel, Peter
Bustellistrasse 9
D-8000 München 19 (DE)

(74) Vertreter : Schmid, Berthold, Dipl.-Ing. et al
Falbenhennenstrasse 17
D-7000 Stuttgart 1 (DE)

EP 0 019 873 B1

Imprimerie Jouve, 18, rue St-Denis, 75001 Paris, France

Transportvorrichtung zur Befestigung auf einem Autodach

Die Erfindung bezieht sich auf eine Transportvorrichtung zur Befestigung auf einem Autodach, mit wenigstens einem, das Dach quer übergreifenden Bügel, an dessen Bügeldchenkeln sich je eine Befestigungsvorrichtung zum Festhalten an einer Regenrinne oder im Bereich derselben befindet, wobei die Befestigungsvorrichtung mittels einer abschließbaren Sicherungsvorrichtung gegen unbefugten Zugriff sicherbar ist und die Sicherungsvorrichtung zugleich noch mit einem Sicherungsstück für die getragene Last zusammenwirkt. Eine derartige Transportvorrichtung ist beispielsweise durch die DE-A-2 707 666 bekannt geworden. Sie dient dort zum gesicherten Transport von zumindest einem Windsurfgerät. Dabei finden drei Bügel Anwendung, von denen der mittlere die Sicherungsvorrichtung aufweist, während die Transportlast, also das oder die Windsurfgeräte, von den beiden äusseren getragen wird. Dadurch läßt sich zwar die Öffnung des Schwertkastens für das Ankuppeln der Sicherungsvorrichtung heranziehen, jedoch wird außer den üblicherweise vorhandenen zwei Bügeln einer solchen Transportvorrichtung noch ein zusätzlicher bzw. dritter Bügel benötigt. Eine direkte Absicherung der Befestigungsvorrichtungen der beiden äußeren Bügel durch eine Sicherungsvorrichtung ist nicht vorgesehen. Würde man an diesen die Sicherungsvorrichtung für den mittleren Bügel beispielsweise in der in der DE-A-25 48 675 vorgeschlagenen Weise anbringen, so hätte das den Nachteil, daß die seitlichen Öffnungen ihres horizontalen Bügelteils nicht mehr zugänglich wären.

Letzteres wird auch bei einer anderen vorbekannten Transportvorrichtung (US-A-3 836 058) bemängelt. Dort befindet sich nämlich die Befestigungsvorrichtung für den Bügel, die zugleich eine Spannvorrichtung für flexible, als Verankerungsstreifen ausgebildete Bügelarme darstellt, am Bügelmittelstück. Infolgedessen muß man an letzterem die Sicherungsvorrichtung montieren.

Des weiteren ist es durch die DE-A-2 426 419 bekannt geworden, mit einem als Schließhebel ausgebildeten Schwenkglied die Befestigungsvorrichtung für den Bügel zu sichern, jedoch befindet sich dieser Schließhebel dort an der Tragvorrichtung für die Last, weswegen diese Transportvorrichtung nur in Verbindung mit ein und derselben Tragvorrichtung verwendet werden kann. Würde man letztere abnehmen, so wie das bei vergleichbaren Transportvorrichtungen möglich ist, um den « leerne » Bügel für eine andere Transportaufgabe heranzuziehen, so ist dies mit dem Nachteil verbunden, daß damit auch der Diebstahlschutz für diese Transportvorrichtung entfällt.

Die Aufgabe der Erfindung wird infolgedessen darin gesehen, eine Transportvorrichtung gemäß dem Oberbegriff des Anspruchs 1 so weiterzubilden, daß sie problemlos in verschiedener Wiese genutzt werden kann und sie unabhängig von der jeweiligen Nutzungsart gegen unbefugtes Abnehmen vom Autodach geschützt ist, wobei jeweils gleichzeitig auch die Transportlast vom Diebstahlschutz umfaßt wird.

Zur Lösung dieser Aufgabe wird erfindungsgemäß vorgeschlagen, daß die Transportvorrichtung gemäß dem Oberbegriff des Anspruchs 1 entsprechend dem kennzeichnenden Teil dieses Anspruchs ausgebildet ist. Aufgrund der unmittelbaren Befestigung der Sicherungsvorrichtung am Bügel bleibt das Bügelmittelstück bzw. dessen freie Enden für die Aufnahme unterschiedlicher Tragvorrichtungen frei, wobei die verschieden gestalteten Tragvorrichtungen jeweils nur ein gleich ausgebildetes Sicherungsstück benötigen oder in Verbindung mit einem entsprechenden Sicherungsstück zu benutzen sind, um einerseits das Öffnen der Bügel- Befestigungsvorrichtung und andererseits auch das unbefugte Abnehmen der Last zu verhindern. Hierbei ist natürlich auch wesentlich, daß die Befestigungsvorrichtung für den Bügel nicht an dessen Mittelstück, sondern an dessen Fußteil liegt, so daß man die Sicherungsvorrichtung dem Fußteil zuordnen und dadurch das Bügelmittelstück bzw. dessen seitliche Öffnungen freihalten kann. Zweckmäßigerweise besitzt der bzw. jeder Bügel an seinen beiden Bügelschenkeln je eine sicherbare Befestigungsvorrichtung. Dies eröffnet die Möglichkeit, auf den linken Bügelhälften eine andere Last zu transportieren als auf den rechten, und dementsprechend gebaute Tragvorrichtungen und/oder Befestigungselemente zu verwenden. Weil das Sicherungsstück von besonders einfacher Bauart sein kann, fallen diesbezüglich keine besonderen Kosten an, wenn man statt der einen Tragvorrichtung bzw. dem einen Befestigungselement eine bzw. ein anderes verwendet. Außerdem ist die Konstruktion insoweit sehr robust und damit wenig störanfällig. Dies ist vor allen Dingen deshalb wichtig, weil solche Transportvorrichtungen meist einem rauhen Betrieb und auch jeder Witterung ausgesetzt sind.

Diese Transportvorrichtungen werden, wie gesagt, in der Regel paarweise verwendet, jedoch schließt das den Sonderfall der Benutzung lediglich eines einzigen bzw. von drei oder mehreren Bügeln nicht aus.

Eine Weiterbildung der Erfinfung sieht vor, daß der Bügel insbesondere im Bereich des Übergangs vom Bügel-Mittelstück zu wenigstens einem der beiden Bügelschenkel eine bzw. je eine Montageöffnung für mindestens eine Tragvorrichtung oder für ein Befestigungselement und/oder ein Sicherungsstück aufweist. Unter « Bügel-Mittelstück » wird der zwischen den beiden Bügelschenkeln gelegene Teil des Bügels verstanden, welcher in aller Regel gerade verläuft. Die Montageöffnung kann beispielsweise durch das bzw. jedes freie Ende des Bügel-Mittelstücks gebildet werden. In diesem Falle empfiehlt es sich, die beiden Bügelschenkel separat zu fertigen und insbesondere an der Unterseite des Bügel-Mittelstücks zu befestigen, wobei man sie zweckmäßigerweise winkelförmig ausbildet. Selbstverständlich ist dabei das Bügel-Mittelstück hohl, so daß sein Inneres, das Einsteckteil der Tragvorrichtung oder des Befestigungselements und/oder des Sicherungsstücks aufnehmen kann. Dabei ist es besonders vorteilhaft, wenn das Bügel-Mittelstück im wesentlichen aus einem vorzugsweise teleskopisch auszieh baren, schienenartigen Profilstab besteht, so daß es verschiedenen Dachbreiten angepasst werden kann. Durch entsprechende Profilwahl kann man eine hohe Belastungsfähigkeit erzielen, und außerdem erhält man dadurch eine Querdurchtrittsmöglichkeit für beispielsweise einen Befestigungsansatz od. dgl., der abnehmbar anzumontierenden Tragvorrichtung oder eines Befestigungselements.

In diesem Zusammenhang sieht eine weitere Ausgestaltung der Erfindung vor, daß das Bügel-Mittelstück einen C- oder U-förmigen Querschnitt mit gegeneinander weisenden U-Schenkelenden besitzt, wobei der durch die frein Schenkelenden gebildete Längsschlitz in Gebrauchslage nach oben weist. Die Tragvorrichtung oder Befestigungselemente oder andere, an jedem Bügel befestigbare Gegenstände kann man infolgedessen mit einem entsprechenden Befestigungsansatz oder -fuß versehen, welcher ins Innere des Bügel-Mittelstücks eingreift und letzteres durch diesen Längsschlitz hindruch nach oben durchsetzt. Die Montage erfolgt in diesem Falle von der bzw. einer der beiden seitlich gelegenen Montageöffnungen aus. Aus diesem Grunde wird in weiterer Ausbildung der Erfindung vorgeschlagen, daß die Tragvorrichtung wenigstens einen Befestigungsansatz aufweist, in dessen beide nach entgegengesetzten Richtungen randoffene Nuten je eines der Schenkelenden des Bügel-Mittelstücks eingreift.

Gemäß einer weiteren Ausbildung der Erfindung ist das Riegelglied gegen die Kraft einer Rückstellfeder in Einsteckrichtung des hakenartigen freien Endes des Sicherungsstücks verschiebbar an der Sicherungsvorrichtung gelagert. Mit dem hakenartigen freien Ende des Sicherungsstücks drückt man das Riegelglied nieder und es springt in seine Ausgangslage zurück, sobald das freie hakenartige Ende an der bügelfesten Verrastkante oder- fläche der Sicherungsvorrichtung angekommen ist und diese untergreifen kann. Soll die Verbindung gelöst werden, so muß das Riegelglied in geeigneter Weise nochmals gegen die Kraft seiner Rückstellfeder verschoben und so lange festgehalten werden, bis die Verhakung gelöst ist.

In weiterer Ausgestaltung der Erfindung wird vorgeschlagen, daß die Sicherungsvorrichtung eine gehäuseförmige, schwenkbar gelagerte, ein Befestigungsmittel der Befestigungsvorrichtung des Bügels übergreifende Schließkappe aufweist, und das bolzenförmig ausgebildete Riegelglied für das freie Ende des Sicherungsstücks zugleich die Schwenkachse für die Schließkappe bildet. Das Befestigungsmittel kann beispielsweise mindestens eine Befestigungsschraube oder -mutter sein, mit welcher ein Klemmstück oder ein anderes Element fest gegen die Regenrinne es Daches oder eine ähnliche Einrichtung des Wagens gepresst werden kann. Zum Befestigen und Abnehmen der Transportvorrichtung muß das Befestigungsmittel zugänglich gemacht werden und man erreicht das in bekannter Weise durch Hochschwenken der Schließkappe. Wenn nun die Schwenkkappe zugleich auch noch das Riegelglied für das Sicherungsstück bildet, so entsteht insofern vorteilhafterweise kein Mehraufwand. Das Verschwenken der Schließkappe ist jedoch nur möglich, wenn man zuvor seine Verrastung löst, die in bekannter Weise mittels eines Schlosses zu sichern ist. Dabei sieht eine weitere Variante der Erfindung vor, daß ein Verriegelungsglied der Sicherungsvorrichtung als insbesondere bolzenförmiges Rastglied ausgebildet ist, das mit einer Rastaufnahme der Sicherungsvorrichtung zusammen wirkt, wobei die Ausrastrichtung etwa der Verschieberichtung des Riegelglieds für das Sicherungsstück entspricht. Der Vorteil dieser Ausbildung liegt darin, daß mit ein und derselben Bewegung die Verrastung der Schließkappe und diejenige des Sicherungsstücks gelöst bzw. freigegeben werden. Das kommt zweifellos dem Bedienungskomfort dieser Transportvorrichtung zugute.

Um aber die unbefugte Betätigung der Schließkappe und damit das Lösen der beiden Rastvorrichtungen zu verhindern, befindet sich in sehr zweckmäßiger Weise an einer rückwärtigen Stützfläche des die Rastaufnahme aufweisenden, am Bügel befestigten Grundkörpers eine Stützfläche für ein schlüsselbetätigtes Sperrglied. Da letzteres und der zugehörige Schließzylinder an der Schließkappe montiert sind, läßt sich die Schließkappe nur dann verschieben, wenn man zuvor mit Hilfe des Schlüssels das Sperrglied durch eine etwa 90°-Drehung von seiner Stützfläche entfernt hat.

Gemäß einer anderen Ausführungsform der Erfindung wird vorgeschlagen, daß das Sicherungsstück als Anschlag oder als Distanzstück für eine mit einem Befestigungsansatz versehene Tragvorrichtung ausgebildet ist. Man befestigt zunächst die Tragvorrichtung am Bügel bzw. Bügel-Mittelstück und montiert nachfolgend das Sicherungsstück. Die Länge des Sicherungsstücks kann nun so bemessen werden, daß es den Raum zwischen dem Riegelglied und dem bzw. einem zugeordneten Befestigungsansatz der Tragvorrichtung gerade ausfüllt. In diesem Falle dient das Sicherungsstück nicht nur zur Absicherung gegen unbeabsichtigtes Herausschieben der Tragvorrichtung, vielmehr läßt es eine seitliche Verschiebung in Längsrichtung des Bügel-Mittelstücks überhaupt nicht zu. Infolgedessen benötigt man keine besonderen Vorrichtungen, um die Tragvorrichtung gegen Verschieben am Bügel-Mittelstück zu sichern. Wenn sich jedoch die Tragvorrichtung am Bügel bzw. Bügel- Mittelstück mittels geeigneter Einrichtungen festklemmen und verschiebefest halten läßt, so kann man das Sicherungsstück kürzer ausbilden. Ein Unbefugter könnte dabei möglicherweise die Befestigungsvorrichtung für die Tragvorrichtung lösen, so daß letztere entlang des Bügels verschoben werden kann, jedoch ist ein Herausschieben über die Montageöffnung nicht möglich, weil diese vom Sicherungsstück verschlossen gehalten wird. Denkbar ist natürlich auch eine Kombination aus beiden Möglichkeiten, d.h. einerseits das Festschrauben der Tragvorrichtung am Bügel-Mittelstück und zugleich auch noch das verschiebefeste Absichern mit Hilfe des Sicherungsstücks.

Die erfindungsgemäße Transportvorrichtung setzt, wie eingangs bereits erläutert wurde, besonders variabel. Das hängt damit zusammen, daß die Tragvorrichtung in besonders vorteilhafter Weise als Bootsträger, Surfbrettträger, Fahrradträger, Skiträger, Skibox, offener oder geschlossener Lastenträger od. dgl. ausgebildet sein kann und trotzdem eine problemlose und rasche Befestigung an dem oder den Bügeln möglich ist, wobei die Sicherung gegen Diebstahl völlig unabhängig von der Ausbildung der Tragvorrichtung ist. Es kommt noch kinzu, daß die verschiedenen Tragvorrichtungen keiner speziellen Ausbildung bedürfen, um mit dem oder den Bügeln verbunden werden zu können, vielmehr reicht es beispielsweise aus, wenn die Tragvorrichtung auf jeder Seite mit einem Sicherungsstück ausgestattet ist. Zweckmäßiger ist es indessen, wenn die Zahl der Sicherungsstücke einer Tragvorrichtung der Zahl der Befestigungsvorrichtungen der Transportvorrichtung entspricht, d.h. wenn die Tragvorrichtung bei zwei Bügeln vier Sicherungsstücke aufweist. Bei einer anderen Variante der Tragvorrichtung ist gemäß der vorangehenden Beschreibung das Anbringen eines Sicherungsstücks nicht notwendig, vielmehr kann sie in herkömmlicher Weise gestaltet sein. Es ist lediglich darauf zu achten, daß sie jeweils mit dem oder den Bügeln bzw. Bügel-Mittelstücken lösbar verbunden werden kann. Die Sicherung gegen Diebstahl erfolgt dann durch die separat an dem oder den Bügeln anzubringenden Sicherungsstücke. Entsprechendes gilt natürlich auch für die Befestigungselemente, die insoweit auch in weiten Grenzen variiert werden können. Man erhält demnach eine in universeller Weise verwendbare vorrichtung und die Tragvorrichtung bzw. das Befestigungselement eine Art Aufsatz oder Ansatz bilden.

Eine andere Variante der Erfindung sieht vor, daß am Sicherungsstück ein insbesondere als Seil od. dgl. ausgebildetes Befestigungselement gehalten ist, wobei das Seil vorzugsweise mit einer Längenausgleichsvorrichtung versehen ist. Das Seil, welches in zweckmäßiger Weise an seinem vom Sicherungsstück entfernten Ende eine Schlaufe besitzt, wird wie ein herkömmliches Sicherungsseil benutzt. Im Gegensatz zu letzterem läßt man jedoch das freie Seilende nicht einfach nach unten hängen, vielmehr wird sein daran befestigtes Sicherungsstück mit der Sicherungsvorrichtung verrastet und durch das Riegelglied festgehalten. Es ist auch ohne weiteres denkbar, an beiden Seilenden je ein Sicherungsstück anzubringen und beide durch ein und dieselbe Sicherungsvorrichtung bzw. deren Riegelglied zu halten. In diesem Falle müßte allerdings das Einsteckende halbe Dicke aufweisen. Die Längenausgleichsvorrichtung kann in bekannter Weise ausgebildet sein, und beispielsweise aus einer Zugfeder, einem Aufrollmechanismus od. dgl. bestehen. Bei Verwendung eines derartigen Sicherungsstücks bleibt dann die Montageöffnung des Bügels frei oder sie wird mit Hilfe eines Stopfens oder eines anderen Elements verschlossen, das jedoch im Normalfalle vom Riegelglied nicht gesichert wird.

Es bleibt noch nachzutragen, daß im Falle einer als Skiträger od. dgl. ausgebildeten Tragvorrichtung letztere in weiterer Ausgestaltung der Erfindung wenigstens zweiteilig ausgebildet ist, wobei das Unterteil an dem oder den Bügeln mittels zumindest je einem Befestigungsansatz gehalten und das schwenkbar daran gelagerte Oberteil mit mindestens einem Sicherungsstück versehen ist. Der Skiträger beispielsweise wird zunächst mit seinem zugeordneten Bügel verbunden und in geeigneter Weise befestigt. Anschließend wird sein Oberteil hochgeklappt und nun kann man die Skier einlegen. Wenn sie die richtige Lage eingenommen haben, schließt man den Skiträger. Sobald sein Sicherungsstück eingerastet ist, wird es durch das Riegelglied gehalten. Bringt man nun mit Hilfe des Schlüssels das Sperrglied der Sicherungsvorrichtung in Sperrstellung, so kann der Skiträger nicht mehr geöffnet und die Tragvorrichtung vom Wagendach nicht abgenommen werden. Mit Ausnahme des Sicherungsstücks bzw. der Sicherungsvorrichtung braucht sich dieser Skiträger von vorbekannten an sich nicht zu unterscheiden.

Ein Skiträger besteht normalerweise aus zwei getrennten Teilen, von denen das eine mit dem vorderen und das andere mit dem hinteren Bügel verbunden wird. Außerdem ist es üblich, auf dem vorderen und hinteren Bügel je zwei Skiträgerhälften zu montieren, so daß die Tragvorrichtung in diesem Falle aus vier, an zwei Bügeln montierbaren Elementen besteht. Im Gegensatz dazu würde beispielsweise ein Dachgepäckträger aus einem Stück bestehen und er könnte mit Ausnahme der Sicherungstücke, von denen er vorzugsweise vier besitzt, in herkömmlicher Weise ausgebildet sein. Wenn man den Dachgepäckträger nicht wie üblich aus Stäben aufbaut, sondern als Hartschale ausbildet, so kann man diese ebenfalls an zwei Bügeln befestigen. An dieser Unterschale kann man nun eine Oberschale schwenkbar anlenken und mit zwei Sicherungsstücken versehen, so daß der auf diese Weise entstandene Koffer sowohl gegen Öffnen als auch Abnehmen von den Bügeln gesichert ist. Selbstverständlich kann man auf den Bügeln auch zwei seitlich nebeneinander zu montierende Koffer halber Breite vorsehen, wobei dann der eine links und der andere rechts in die beiden Sicherungsvorrichtungen eingeriegelt wird.

In der Zeichnung sind verschiedene Ausführungsbeispiele der Erfindung dargestellt. Es zeigen :

Figur 1 eine abgebrochene Darstellung einer zwei Bügel aufweisenden Transportvorrichtung, die zum Transport von Skiern geegnet ist,

Figur 2 eine analoge Darstellung einer Transportvorrichtung zum Transport eines Surfbretts,

Figur 3 in vergrößertem Maßstab eine teilweise geschnittene Seitenansicht des einen Bügels der Fig. 1 im Bereich der Befestigungs- und Sicherungsvorrichtung,

Figur 4 einen Ausschnitt aus Fig. 3 bei entriegeltem Riegelglied,

Figur 5 wiederum einen Ausschnitt im Bereich eines Bügelendes einer weiteren Variante mit einem anders ausgebildeten Sicherungsstück,

Figur 6 einen Schnitt durch das bügelförmige Mittelstück der Fig. 1 einer Darstellung des Befestigungsansatzes.

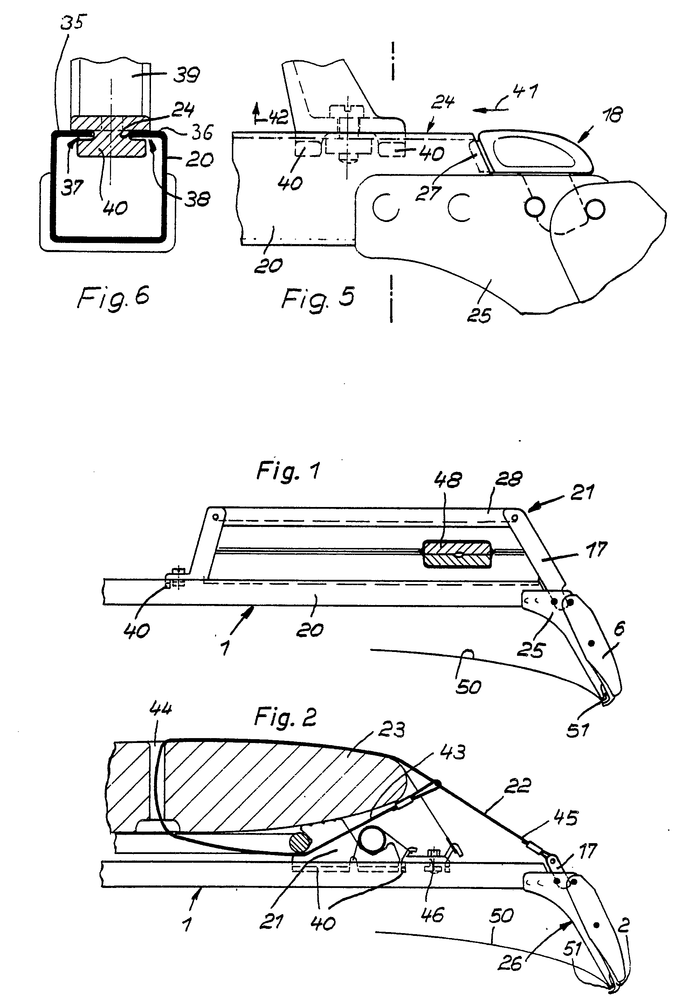

Die Transportvorrichtung des Ausführungsbeispiels der Figuren 1 und 2 umfasst jeweils zwei Bügel 1, die in bekannter Weise in Längsrichtung versetzt, am Dach 50 eines Fahrzeugs abnehmbar befestigt sind und dieses in Querrichtung übergreifen. Die Befestigung erfolgt vorzugsweise an den beiden Dachrinnen 51 des Fahrzeugs oder an vergleichbaren Leisten, Kanten od. dgl. Dabei kann sich der Bügel unmittelbar in der Dachrinne oder, falls eine solche nicht vorhanden oder für die Montage ungeeignet ist, auch am Dach abstützen, wobei allerdings ein andersartiger Stützfuß 52 erforderlich sein kann als bei der Abstützung in der Dachrinne. In allen Fällen ist aber ein die Dachrinne oder Befestigungsleiste umfassender hakenförmiger Vorrichtungteil 2 vorhanden, der mit Hilfe eines geeigneten Befestigungsmittels 3 von unten gegen die Dachrinne pressbar ist. Zu diesem Zwecke ist er relativ zum Bügel 1 bewegbar- insbesondere verschiebbar. Bei dem Befestigungsmittel kann es sich wie die Zeichnung zeigt, um wenigstens eine einfache Schraube, aber auch um eine Flügel- oder Rändelschraube handeln. Bei feststehendem Gewindebolzen sind selbstverständlich normale Muttern, Rändelmuttern, Flügelmuttern und dgl. sinngemäß verwendbar. Demnach umfasst eine Befestigungsvorrichtung 4 für das betreffende Bügelende einen entsprechend dem Wagentyp gestalteten Stützfuß 5, das hakenförmige Vorrichtungsteil 2 sowie das oder die zugehörigen Befestigungsmittel 3.

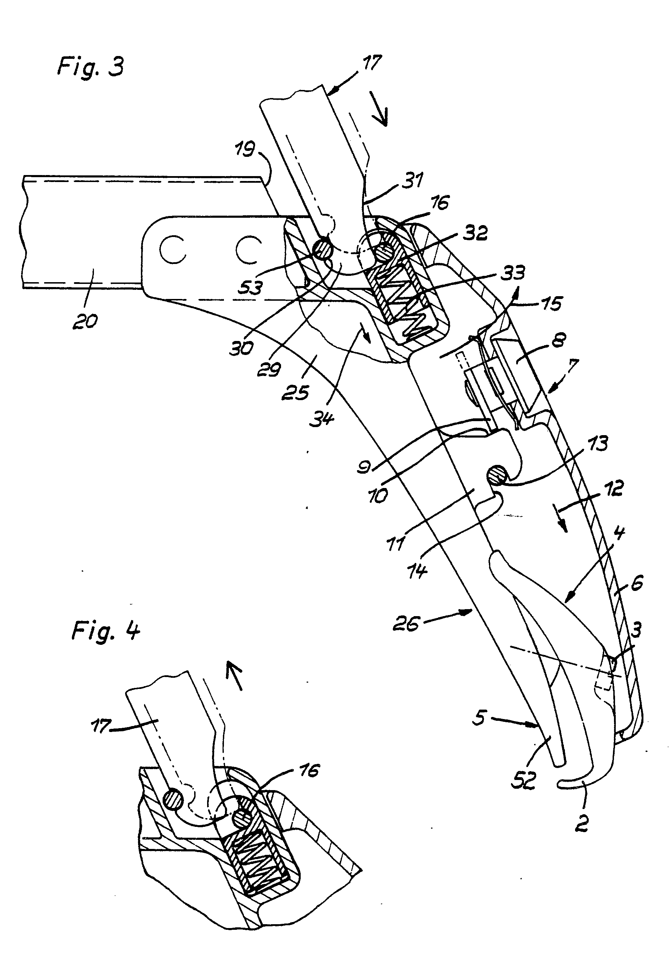

Damit Unbefugte den Bügel bzw. die Transportvorrichtung vom Dach nicht abnehmen können, wird die Befestigungsvorrichtung 4 bzw. deren Befestigungsmittel, von einer Schließkappe 6 übergriffen. Sie ist Bestandteil einer abschließbaren Sicherungsvorrichtung 7. Ein wichtiges Teil der letzteren stellt das Schloß 8 mit dem Sperrglied 9 dar. Bei letzterem handelt es sich vorzugsweise um einen Nocken, der in Sperrstellung (feste Linien) nach unten weist, und an einer Stützfläche 10 eines am Bügel 1 befestigten oder angeformten Formstücks 11. Mit Hilfe eines nichtgezeigten Schlüssels kann man das Sperrglied 9 der Figur 3 beispielsweise um 180° drehen, so daß es von der Stüzfläche 10 abhebt und nach oben weist. Anschließend kann man die Schließkappe 6 der Sicherungsvorrichtung 7 relativ zum Formstück 11, also zum bügelfesten Teil der Sicherungsvorrichtung, in Pfeilrichtung 12 verschieben.

Am schwenkbar gelagerten Teil der Sicherungsvorrichtung 7, nämlich der Schließkappe 6, ist ein vorzugsweise aus einem Querbolzen bestehendes Rastglied 13 montiert. Bei heruntergeschwenker Schließkappe greift es in eine Rastaufnahme 14 der Sicherungsvorrichtung bzw. des Formstücks ein. Infolgedessen ist eine Verschwenkung der Schließkappe 6 in Richtung des Pfeils 15 erst dann möglich, wenn dieser Schwenkbewegung eine Verschiebebewegung in Pfeilrichtung 12 vorausgeht, welche die Verrastung der Teile 13, 14 aufhebt. Gemäß einem Erfindungsmerkmal ist die Schwenkachse der Schließkappe 6 zugleich auch ein Riegelglied 16 für ein Sicherungsstück und kann gemäß einem anderen Erfindungsmerkmal auch noch als Sicherungsvorrichtung für dieses Sicherungsstück ausgenutzt werden. Desweiteren kann letzteres eine Montageöffnung 19 des Bügels, genauer gesagt des zugeordneten Endes des Bügel-Mittelstücks 20 verschließen oder an einer Tragvorrichtung 21 (Fig. 1) angebracht sein. Gemäß Figur 2 kann man das Sicherungsstück 17 auch an einem Befestigungselement 22 anbringen, welches dort als Seil ausgebildet ist und zum Festhalten eines die Transportlast darstellenden Surfbretts 23 dient.

Das Bügel-Mittelstück 20 besteht aus einem teleskopischen ausziehbaren und infolgedessen an verschiedene Dachbreiten anzupassenden schienenartigen Profilstab von insbesondere U-förmigem querschnitt, wobei die freien Bügelenden zur Bildung eines nach oben offenen Längsschlitzes 24 rechtwinklig nach innen hin umgebogen sind. Die beiden Enden des Bügel-Mittelstücks sind an je einem winkel- oder bogenförmigen Bügelaußenstück 25 befestigt, beispielsweise angenietet, dessen nach unten und vorzugsweise auch leicht nach außen weisender Schenkel zugleich den Bügelschenkel 26 bildet. Letzterer kann einstückig mit dem Formstück 11 hergestellt sein und dieses wenigstens teilweise bilden.

Am Übergang vom Bügelschenkel 26 zum Bügel-Mittelstück 20 befindet sich jeweils eine der erwähnten Montageöffnungen 19. Beim Ausführungsbeispiel der Figur 5 ist in diese Montageöffnung ein Sicherungsstück 18 eingeschoben, dessen stopfenartiger Befestigungsteil 27 das Herausschieben des oder der an dem betreffenden Bügel montierten Tragvorrichtung 21 verhindert. Weil das Sicherungsstück 18 vom Riegelglied 16 gehalten ist, kann diese Tragvorrichtung 21 von einem Unbefugten möglicherweise gelockert — falls ihre Befestigungselemente zugänglich sind — nicht jedoch vom Bügel heruntergenommen werden, wenn sich das Sperrglied 9 in Sperrstellung befindet. Die Tragvorrichtung muß, wie bereits erläutert, nicht notwendigerweise als Skihalter ausgebildet sein, vielmehr sind zumindest auch noch die anderen erwähnten Ausführungsformen brauchbar.

Im Falle eines Skihalters für insbesondere mehrere Paar Skier 48 befindet sich das Schließstück 17 am freien Ende von dessen Schließbügel 28. Wenn letzterer vollständig geschlossen ist, untergreift das freie hakenartige Ende 29 des Sicherungsstücks 17 eine Kante oder Fläche 30 des Bügelschenkels 26 die wie Fig. 3 zeigt, durch die Unterseite eines Querbolzens 53 gebildet sein kann. Diese Verhakung wird von dem als Bolzen oder Rolle ausgebildeten Riegelglied 16 gesichert. Das freie Ende 29 ist an seiner rückwärtigen Seite vorzugsweise mit einer Ausnehmung 31 versehen.

Das Riegelglied 16 befindet sich an einem Führungsstück 32, welches gegen die Kraft einer Rückstellfeder 33 in Pfeilrichtung 34 am Formstück 11 bzw. Bügelschenkel 26 verschoben werden kann. Infolgedessen kann man die Tragvorrichtung gewissermaßen einklinken, indem man mit dem freien hakenartigen Ende gegen das jeweils zugeordnete Riegelglied 16 drückt (strichpunktierte Darstellung) und es in Pfeilrichtung 34 verschiebt, bis die Verrastung mit der Kante oder Fläche 30 stattfindet. Dieser Vorgang ist selbst in der Schließstellung der Schließkappe 6 möglich, jedoch muß sich dabei das Sperrglied 9 in der Freigabestellung befinden, weil das Einklinken ein Verschieben der Schließkappe in Pfeilrichtung 12 voraussetzt. Bei der Montage des Sicherungsstücks 18 ist es jedoch zweckmäßig und je nach Ausbildung des Befestigungsteils 27 unter Umständen unerläßlich, daß man zunächst die Schließkappe 6 nach unten zieht, um das Einführen des Befestigungsteils 27 in das Bügelförmige Mittelstück überhaupt zu ermöglichen. Die Verriegelung ist vollzogen, sobald man die Schließkappe freigibt.

Wie Figur 6 deutlich zeigt, greifen die beiden freien, gegeneinander weisenden Schenkelenden des Schienenartigen Bügel-Mittelstücks 20 in je eine randoffene Nut 37 bzw. 38 eines Befestigungsansatzes 39 ein. Sein im Querschnitt T-förmiger Fuß 40 kann das Innere des Bügel-Mittelstücks ganz oder teilweise ausfüllen. Wenigstens ein derartiger Fuß kann an der Tragvorrichtung 21 oder einem Befestigungselement 22 oder dei Sicherungsstück 18 befestigt oder angeformt sein. Er gestattet eine Montage in Pfeilrichtung 41, d.h. in Längsrichtung des T-Mittelstücks 20 des Bügels 1, nicht jedoch ein Herausziehen senkrecht zur Längsachse des Bügels, also in Pfeilrichtung 42.

Das Befestigungselement 22, welches mit dem zugeordneten Bügel 1 eine der möglichen Ausführungsformen der erfindungsgemäßen Transportvorrichtung bildet, kann, wie Figur 2 zeigt, beispielsweise aus einem Seil bestehen. Zweckmäßigerweise ist sein eines Ende 43 schlaufenartig gestaltet, während an seinem anderen Ende, wie bereits erläutert, daß Sicherungsstück 17 befestigt ist. Zum Transport beispielsweise eines Surfbretts 23 kann man das Seil durch die Querbohrung 44 des Surfbretts durchziehen und dann das Seilende 45 durch das schlaufenförmige Ende 43 hindurchführen. Anschließend wird das Sicherungsstück 17 in der beschriebenen Weise verrastet und mit Hilfe des Riegelglieds 16 und des Schlosses 8 gesichert. Das Surfbrett 23 liegt auf einer seiner Form angepassten und in besonderer Weise ausgebildeten Tragvorrichtung 21 auf die man zum Festbinden mit heranziehen kann. Sie wird in der geschilderten Weise an den beiden Bügel-Mittelstücken montiert und mit Hilfe nicht näher gezeigter Klemmvorrichtungen 46 gegen Verschieben gesichert.

### Ansprüche

1. Transportvorrichtung zur Befestigung auf einem Autodach (50), mit wenigstens einem das Dach quer übergreifenden Bügel (1), an dessen Bügelschenkeln (26) sich je eine Befestigungsvorrichtung (4) zum Festhalten an einer Regenrinne (51) oder im Bereich derselben befindet, wobei die Befestigungsvorrichtung (4) mittels einer abschließbaren Sicherungsvorrichtung (7) gegen unbefugten Zugriff sicherbar ist und die Sicherungsvorrichtung zugleich noch mit einem Sicherungsstück (17, 18) für die getragene Last zusammenwirkt, dadurch gekennzeichnet, daß die Sicherungsvorrichtung (7) am Bügel (1) schwenkbar gelagert ist und das Sicherungsstück (17, 18) eine Montageöffnung (19) des Bügels verschließt und/oder an einer Tragvorrichtung (21) und/oder an einem Befestigungselement (22) für die Last angebracht ist, wobei das Sicherungsstück (17, 18) ein hakenartiges freies Ende (29) besitzt, welches eine Kante oder Fläche (30) eines Bügelschenkels (26) untergreift und dabei an seiner vom freien Hakenende weg-weisenden Fläche oder Kante (31) an einem Riegelglied (16) der Sicherungsvorrichtung (7) anliegt.

2. Transportvorrichtung nach Anspruch 1, dadurch gekennzeichnet, daß der Bügel (1) im Bereich des Übergangs vom Bügel-Mittelstück (20) zu den beiden Bügelschenkeln (26) je eine Montageöffnung (19) für mindestens eine Tragvorrichtung (21) oder für ein Befestigungselement (22) und/oder zumindest ein Sicherungsstück (17, 18) aufweist.

3. Vorrichtung nach Anspruch 2, dadurch gekennzeichnet, daß das Bügel-Mittelstück (20) im wesentlichen aus einem vorzugsweise teleskopisch ausziehbaren, schienenartigen Profilstab besteht.

4. Vorrichtung nach Anspruch 3, dadurch gekennzeichnet, daß das Bügel-Mittelstück (20) einen C- oder U-förmigen Querschnitt mit gegeneinander weisenden U-Schenkelenden (35, 36) besitzt, wobei der durch die freien Schenkelenden gebildete Längsschlitz (24) in Gebrauchslage nach oben weist.

5. Vorrichtung nach Anspruch 4, dadurch gekennzeichnet, daß die Tragvorrichtung (21) wenigstens einen Befestigungsansatz (39) aufweist, in dessen beide nach entgegengesetzten Richtungen randoffene Nuten (37, 38) je eines der Schenkelenden (35, 36) des Bügel-Mittelstücks (20) eingreift.

6. Vorrichtung nach wenigstens einem der Ansprüche 1 bis 5, dadurch gekennzeichnet, daß das Riegelglied (16) gegen die Kraft einer Rückstellfeder (33) in Einsteckrichtung (34) des hakenartigen freien Endes (29) des Sicherungsstücks (17, 18) verschiebbar an der Sicherungsvorrichtung (7) gelagert ist.

7. Vorrichtung nach Anspruch 6, dadurch gekennzeichnet, daß die Sicherungsvorrichtung (7) eine gehäuseförmige, schwenkbar gelagerte, ein Befestigungsmittel (3) der Befestigungsvorrichtung (4) des Bügels (1) übergreifende Schließkappe (6) aufweist und das bolzenförmig ausgebildete Riegelglied (16) für das freie Ende (29) des Sicherungsstücks (17, 18) zugleich die Schwenkachse für die Schließkappe bildet.

8. Vorrichtung nach Anspruch 7, dadurch gekennzeichnet, daß ein Verriegelungsglied der Sicherungsvorrichtung (7) als insbesondere bolzenförmiges Rastglied (13) ausgebildet ist, das mit einer Rastaufnahme (14) der Sicherungsvorrichtung (7) zusammenwirkt, wobei die Ausrastrichtung etwa der Verschieberichtung (12) des Riegelglieds (16) für das Sicherungsstück (17, 18) entspricht.

9. Vorrichtung nach Anspruch 8, dadurch gekennzeichnet, daß sich an einer rückwärtigen Stützfläche des die Rastaufnahme aufweisenden, am Bügel (1) befestigten Grundkörpers (11) eine Stützfläche (10) für ein schlüsselbetätigtes Sperrglied (9) befindet.

10. Vorrichtung nach wenigstens einem der vorhergehenden Ansprüche, dadurch gekennzeichnet, daß das Sicherungsstück (18) als Anschlag oder als Distanzstück für eine mit einem Befestigungsansatz (39) versehene Tragvorrichtung (21) ausgebildet ist.

11. Vorrichtung nach wenigstens einem der vorhergehenden Ansprüche, dadurch gekennzeichnet, daß die Tragvorrichtung (21) als Bootsträger, Surbrettträger, Fahrradträger, Skiträger, Skibox, offener oder geschlossener Lastenträger od. dgl. ausgebildet ist.

12. Vorrichtung nach Anspruch 11, dadurch gekennzeichnet, daß der Skiträger (21) od. dgl. wenigstens zweiteilig ausgebildet ist, wobei das Unterteil an dem oder den Bügeln (1) mittels zumindest je einem Befestigungsansatz (39) gehalten und das schwenkbar daran gelagerte Oberteil (28) mit mindestens einem Sicherungsstück (17) versehen ist.

13. Vorrichtung nach wenigstens einem der Ansprüche 1 bis 9, dadurch gekennzeichnet, daß am Sicherungsstück (17) ein insbesondere als Seil od. dgl. ausgebildetes Befestigungselement (22) gehalten ist, wobei das Seil vorzugsweise mit einer Längenausgleichsvorrichtung versehen ist.

**Claims**

1. Transportation device for attachment to a car roof (50), comprising at least one bracket (1) extending transversely over the roof, the arms (26) of the bracket each having an attachment device (4) for attachment to a rain gutter or in the region thereof, the attachment device (4) being securable against unauthorised access by means of a closable security device (7), and the security device at the same time also cooperating with a securing member (17, 18) for the load carried, characterised in that the security device (7) is pivotally mounted on the bracket (1) and the securing member (17, 18) closes an assembly opening (19) of the bracket and/or is attached to a supporting frame (21) and/or to a fastening element (22) for the load, the securing member (17, 18) having a hook shaped free end (29) which grips under an edge or surface (30) of an arm (26) of the bracket while its side or edge (31) facing away from its free hook shaped end bears against a locking bolt (16) of the security device (7).

2. Transportation device according to Claim 1, characterised in that the bracket (1) has an assembly opening (19) on each side at the region of transition from the middle piece (20) of the bracket to the bracket arm (26) of the respective side, to serve for at least one supporting frame (21) or for a fastening element (22) and/or one or more than one securing member (17, 18).

3. Device according to Claim 2, characterised in that the middle piece (20) of the bracket consists substantially of a profile rod in the form of a rail which is preferably telescopically extensible.

4. Device according to Claim 3, characterised in that the middle piece (20) of the bracket is C-shaped or U-shaped in cross section with the arms of the U (35, 36) pointing towards each other and the longitudinal slot (24) formed by the free ends of the arms facing upwards in the position of use.

5. Device according to Claim 4, characterised in that the supporting frame (21) has at least one mounting shoulder (39) with two grooves (37, 38) opening in opposite directions, each for the engagement of the end of one of the arms (35, 36) of the middle piece (20) of the bracket.

6. Device according to at least one of the Claims 1 to 5, characterised in that the locking bolt (16) is mounted on the security device (7) to be displaceable against the force of a restoring spring (33) in the direction of insertion (34) of the hook shaped free end (29) of the securing member (17, 18).

7. Device according to Claim 6, characterised in that the security device (7) has a closing cap (6) in the form of a pivotally mounted housing covering a fastening element (3) of the attachment device (4) of the bracket (1), and the locking member (16) in the form of a bolt for the free end (29) of the securing member (17, 18) at the same time forms the pivot for the closing cap.

8. Device according to Claim 7, characterised in that a locking element of the security device (7) is in particular in the form of a catch bolt (13) cooperating with a notch (14) of the security device (7), the direction of unlocking corresponding approximately to the direction of displacement (12) of the locking bolt (16) for the securing member (17, 18).

9. Device according to Claim 8, characterised in that a supporting surface (10) for a key operated lock bolt (9) is situated on a rear bearing surface of the supporting member (11) which is fixed to the bracket (1) and carries the notch.

10. Device according to at least one of the preceding Claims, characterised in that the securing member (18) is designed as stop or as spacer member of a supporting frame (21) which has a mounting shoulder (39).

11. Device according to at least one of the preceding Claims, characterised in that the supporting frame (21) is constructed as boat carrier, surfboard carrier, bicycle carrier, ski carrier, ski box, open or closed load carrier, or the like.

12. Device according to Claim 11, characterised in that the ski carrier (21) or the like is formed in at least two parts, the lower part being held to the one or more than one bracket (1) by means of at least one mounting should (39) while the upper part (28) which is pivotally mounted on the lower part is provided with at least one securing member (17).

13. Device according to at least one of the Claims 1 to 9, characterised in that a fastening element (22), in particular in the form of a cable or the like, is held on the securing member (17), and the cable is preferably provided with a length adjustment device.

**Revendications**

1. Dispositif de transport destiné à être fixé sur un pavillon de véhicule (50), comprenant au moins un arceau (1) qui chevauche transversalement le pavillon et sur chacune des branches d'arceau (26) duquel se trouve un dispositif de fixation (4) destiné à la fixation sur une gouttière (51) ou dans la région de celle-ci, le dispositif de fixation (4) pouvant être protégé de l'accès non autorisé au moyen d'un dispositif de sûreté (7) qui peut être fermé et le dispositif de sûreté coopérant en même temps encore avec un élément de sûreté (17, 18) prévu pour la charge portée, caractérisée en ce que le dispositif de sûreté (7) est monté pivotant sur l'arceau (1) et l'élément de sûreté (17, 18) ferme une ouverture de montage (19) de l'arceau et/ou est monté sur un dispositif porteur (21) et/ou sur un élément de fixation (22) prévu pour la charge, l'élément de sûreté (17, 18) possédant une extrémité libre en forme de crochet qui s'engage sous un bord ou une surface (30) d'une branche (26) de l'arceau et, alors, s'applique, au niveau de sa surface ou de son bord (31) qui est à l'opposé de l'extrémité en crochet, contre un verrou (16) du dispositif de sûreté (7).

2. Dispositif de transport suivant la revendication 1, caractérisé en ce que l'arceau (1) présente, dans chaque région de jonction entre l'élément central (20) de l'arceau et les deux branches (26) de l'arceau, une ouverture de montage (19) pour au moins un dispositif porteur (21) ou pour un élément de fixation (22) et/ou au moins un élément de sûreté (17, 18).

3. Dispositif suivant la revendication 2, caractérisé en ce que l'élément central (20) de l'arceau est essentiellement composé d'une barre profilée en forme de rail, de préférence télescopiquement extensible.

4. Dispositif suivant la revendication 3, caractérisé en ce que l'élément central (20) de l'arceau possède une section en C ou en U, avec des extrémités de branches du U (35, 36) qui sont dirigées l'une vers l'autre, la fente longitudinale (24) formée par les deux extrémités libres des branches regardant vers le haut dans la position d'utilisation.

5. Dispositif suivant la revendication 4, caractérisé en ce que le dispositif porteur (21) présente au moins un talon de fixation (39) dans chacune des deux rainures (37, 38), ouvertes sur le bord et dirigées en sens opposés dans lesquelles s'engage l'une des extrémités (35, 36) des branches de l'élément central (20) de l'arceau.

6. Dispositif suivant au moins l'une des revendications 1 à 5, caractérisé en ce que le verrou (16) est monté sur le dispositif de sûreté (7) de manière à pouvoir se déplacer en translation dans le sens (34) de l'emmanchement de l'extrémité libre (29) en forme de crochet de l'élément de sûreté (17, 18) en surmontant la force d'un ressort de rappel (33).

7. Dispositif suivant la revendication 6, caractérisé en ce que le dispositif de sûreté (7) comprend un chapeau de fermeture (6) en forme de boîtier, monté pivotant, qui recouvre un moyen de fixation (3) du dispositif de fixation (4) de l'arceau (1) et le verrou (16), en forme de boulon, prévu pour l'extrémité libre (29) de l'élément de sûreté (17, 18), forme en même temps l'axe de pivotement du chapeau de fermeture.

8. Dispositif suivant la revendication 7, caractérisé en ce qu'un organe de verrouillage du dispositif de sûreté (7) est réalisé sous la forme d'un organe d'arrêt (13), notamment en forme de boulon, qui coopère avec un logement d'arrêt (14) du dispositif de sûreté (7), la direction de dégagement correspondant à peu près à la direction de translation (12) du verrou (16) pour l'élément de sûreté (17, 18).

9. Dispositif suivant la revendication 8, caractérisé en ce que sur une surface d'appui arrière du corps de base (11) fixé à l'arceau (1) et qui présente le logement d'arrêt, se trouve une surface d'appui (11) prévue pour un organe de blocage (9) actionné par une clé.

10. Dispositif suivant au moins l'une des revendications précédentes, caractérisé en ce que l'élément de sûreté (18) est réalisé sous la forme d'une butée ou d'une pièce entretoise pour un dispositif porteur (21) muni d'un talon de fixation (39).

11. Dispositif suivant au moins l'une des revendications précédentes, caractérisé en ce que le dispositif porteur (21) est réalisé sous la forme d'un porte-bateau, d'un porte-planche de surf, d'un porte-bicyclette, d'un porte-skis, d'une caisse à skis, d'un support de charge ouvert ou fermé, ou analogue.

12. Dispositif suivant la revendication 11, caractérisé en ce que le porte-skis (21) ou analogue est réalisé en au moins deux parties, la partie inférieure étant fixée à l'arceau ou aux arceaux (1) à l'aide d'au moins un talon de fixation (39) pour chacun et la partie supérieure (28), qui est montée pivotante sur cette partie inférieure, étant munie d'au moins un élément de sûreté (17).

13. Dispositif suivant au moins l'une des revendications 1 à 9, caractérisé en ce que sur l'élément de sûreté (17) est maintenu un élément de fixation (22), notamment réalisé sous la forme d'un câble ou analogue, le câble étant de préférence muni d'un dispositif de compensation de longueur.

Fig. 6

Fig. 5

Fig. 1

Fig. 2

Fig. 3

Fig. 4